# EUROPEAN PATENT APPLICATION

(11) **EP 4 704 068 A1**
(43) Date of publication of application: **04.03.2026**
(21) Application number: 24196657.1
(22) Date of filing: 27.08.2024
(51) Int. Cl.: G09B 19/00

(54) **A METHOD FOR PROVIDING A TRAINING SIMULATION FOR A PERSON BY AN ELECTRONIC COMPUTING DEVICE, A COMPUTER PROGRAM PRODUCT, A COMPUTER-READABLE STORAGE MEDIUM, AS WELL AS AN ELECTRONIC COMPUTING DEVICE**

(71) Applicant: Siemens Aktiengesellschaft, 80333 München (DE)
(72) Inventor: Johnson, Rebecca, 81739 München (DE)
(74) Representative: Siemens Patent Attorneys

(57) **Abstract**

The invention relates to a method for providing a training simulation (26) for a person (28) by an electronic computing device (10), comprising the steps of: providing an input platform (32) for capturing at least one input phrase (34) from the person (28) by the electronic computing device (10); analyzing the input phrase (34) depending on a negative connotation by an artificial intelligence (14) of the electronic computing device (10); if a negative connotation of the input phrase (34) is determined, determining the meaning of the input phrase (34) by the artificial intelligence (14); depending on the determined meaning, selecting a positive connoted phrase (36) by the artificial intelligence (14), wherein the positive connoted phrase (36) is inside a meaning range of the input phrase (34); and presenting the positive connoted phrase (36) for the person (28) by the electronic computing device (10). Furthermore, the present invention relates to a computer program product, a computer-readable storage medium, as well as to an electronic computing device (10).

## Description

The present invention relates to a method for providing a training simulation for a person by an electronic computing device according to the pending claim 1. Furthermore, the present invention relates to a corresponding computer program product, a corresponding computer-readable storage medium, as well as to a corresponding electronic computing device.

Soft skills, also known as interpersonal or social skills, are personal qualities, behaviors and abilities that a person needs to effectively communicate, collaborate, and build relationships with others. Unlike hard skills, such as technical or job specific skills, soft skills are not easily defined or measured, but are equally important for professional and personal success. Training programs for soft skills can help improve communication skills, teamwork, leadership abilities, conflict resolution skills, creativity, time management, empathy, and more. Such training can be offered in form of workshops, seminars, coaching, online courses, or personal development.

During a soft skill training program, various methods are used, such as role plays, group discussions, case studies, feedback sessions, and reflection exercises. These methods enable participants to practice and improve their skills in realistic situations and receive immediate feedback from trainers and other participants.

Soft skills trainings can be offered for individuals, teams, or organizations. For businesses, targeted soft skills trainings can help increase productivity, motivation, and job satisfaction, reduce conflicts, and foster a positive work culture.

It is important to note that soft skills cannot be acquired in a single training session, but rather are a continuous learning process that is fostered through experience, feedback, and reflection. A good soft skill training program should therefore be tailored to individual needs and goals of participants and have sustainable impact.

There are several computer programs and online platforms known that can help individuals develop and improve their soft skills. These programs often use interactive elements, such as simulations, quizzes and games to engage users and provide a hand-on learning experience.

In particular, training material for soft skill trainings is of limited availability. The skill of active listening is useful in daily negotiation and conversion, for example, in sales, service and management but involves self-control and restraint.

Therefore, there is a need in the art to provide a soft skill training program in order to train in a frequent manner for developing the soft skills.

It is an object of the present invention to provide a method, a corresponding computer program product, a corresponding computer-readable storage medium, as well as a corresponding electronic computing device, by which a training simulation for a person can be provided in an improved manner.

This object is solved by a method, a corresponding computer program product, a corresponding computer-readable storage medium, as well as a corresponding electronic computing device according to the independent claims. Advantageous embodiments of the invention are provided in the dependent claims.

One aspect of the invention relates to a method for providing a training simulation for a person by an electronic computing device. An input platform for capturing at least one input phrase from the person is provided by the electronic computing device. The input phrase is analyzed depending on a negative connotation by an artificial intelligence of the electronic computing device. If a negative connotation of the input phrase is determined, determining the meaning of the input phrase by the artificial intelligence is provided. Depending on the determined meaning, selecting a positive connoted phrase by the artificial intelligence, wherein the positive connoted phrase is inside a meaning range of the input phrase. The positive connoted phrase is presented for the person by the electronic computing device.

Soft skills refer to personal qualities and abilities that are not directly related to a professional expertise but are still essential for success in work place. These include leadership skills, communication ability, team work, creativity, and empathy. Using positively connoted phrases /words can help to effectively utilize and strengthen soft skills. For example, by using positively connoted words, a person can communicate more clearly and more convincingly. For example, instead of saying "I think that", one could say "I'm sure that" to express more certainty. Furthermore, positively connoted words can help create a more empathetic and supportive environment. For instance, instead of saying "you failed" one could say "let's figure out together how we can improve this". Furthermore, using positively connoted words can foster a positive and collaborative team spirit. For example, instead of saying "I will do it my way", one could say "let's find out together what the best solution is". Furthermore, positively connoted words can help create a motivating and inspiring environment. For instance, instead of saying "I expect you to", one could say "I know you can do it". Furthermore, using positively connoted words can help creating a more creative and innovative environment. For example, instead of saying "It's not possible", one could say "let's figure out how we can make it work".

Overall, using positively connoted words can contribute creating a positive and supportive atmosphere where people feel comfortable and can reach their full potential.

Negative connoted words and positive connoted words refer to the emotional association that people have with certain words. Negative connoted words carry a negative emotional charge and can create feelings of discomfort, hostility, or disapproval in the listener. Examples of negative connoted words include for example hate, stupid, lazy, failure and incompetent. These words can have a damaging effect on communications, relationships, and motivation. Positive connoted word, on the other hand, carry a positive emotional charge and create feelings of approval, appreciation, or positivity in the listener. Examples of positive connoted words include love, intelligent, creative, success, and competent. These words can help to build relationships, foster positive communication and increase motivation.

The use of negative connoted words can create barriers to effective communication, damage self-esteem, and undermine trust in relationships. In contrast, the use of positive connoted words can promote understanding, and enhance collaboration. Therefore, it is generally recommended to use positive connoted words whenever possible, especially in professional and personal interactions where building strong relationships and fostering positive communication are important. However, it is also essential to be mindful of the context and chose words that accurately convey the intended message while avoiding those that may create unnecessary negativity or hostility.

In particular, the artificial intelligence can be provided with training data in order to a difference between negative connoted phrases and positive connoted phrases.

In particular, according to the invention a meaning range can also be called a so called semantic field. In linguistic, a sematic field, which may also be referred as the meaning field, refers to a group of related words expressions that share a common conceptual meaning.

These words and expressions are often used in similar context, evoke similar associations, and have overlapping semantic features. For example, the semantic field of colors will include words like red, blue, green, yellow, and so on as they are referred to different wave lengths of light that a person may perceive as colors. Similarly, the semantic field of emotions might include words like happy, sad, angry, anxious, and so forth, as they all relate to different emotional states.

Semantic fields are useful in linguistic analyses because they can help to understand how language is organized around concepts and themes, and how words and expressions are related to one another. They can also shed light on the cultural and cognitive factor that shape the usage of language, as well as the ways in which the word may be categorized and make sense for a person. Therefore, the semantic field or meaning range in linguistic refers to a group of related words or expressions that share a common conception or a thematic meaning and is often used in similar contexts. In particular, the artificial intelligence therefore uses the meaning field in order to differentiate between the negative connoted phrases and the positive connoted phrases.

If the input phrase is analyzed as a positive connoted phrase, it is possible to give no output. Alternatively, for example a semantically similarly positive connoted word can be outputted.

According to an embodiment the artificial intelligence is provided as a large language model. Furthermore, the "conversation" between the electronic computing device and the person can be provided with a large language model. A large language model, which may also be called language model, is in particular be referred to the context of natural language processing (NLP) and artificial intelligence (Al). A large language model is a type of artificial intelligence model that is trained on large amounts of text data to understand patterns, structures, and meaning in human language. A large language model typically refers to a model that has been trained on an extremely large dataset, often consisting of billions or even trillions of words. These models are capable of generating human-like texts, translating languages, summarizing documents, answering questions, and performing other language-related tasks with high accuracy and fluency. Large language models have many potential applications in areas such as a customer service, content creation, education and research. However, they also raise ethical, and society consensus related to bias, misinformation, and job displacement. As such, a large language model is an important approach to develop deployment of large language models with care under consideration of their potential impacts on individuals and society as a whole. Therefore, a large language model is used to train the systematic questioning techniques of the person. In another embodiment, the large language model is trained for role playing with persons. Role playing is a common technique used in language learning to simulate real-life conversations and scenarios. Role playing allows learners to practice speaking, listening and interacting with others in a safe and controlled environment. In the context of LLMs, role playing can be used to create interactive and immersive language learning experiences. For example, a large language model could generate personalized role-playing scenarios based on the learner's proficiency level, interests and goals. The person can then interact with the virtual character or Al-power chat board in real-time, practicing language skills and receiving feedback on the performance. Role-playing can help develop various soft skills that are essential for effective communication and relationship building. For simulating real-life conversations and scenarios, role-playing can help learners practice active listening, empathy, problem-solving, creativity, and adaptability. It can also help built cultural awareness and sensitivity, as learners are exposed to different perspective and world views through the virtual characters they interact with.

According to another embodiment as the positive connoted phrase an adjective and/or a noun and/or an adverb and/or a verb is selected. In particular, the selection depends on the type of input of the phrase. Therefore, not only adjectives or adverbs can be selected also positive connoted verbs and positive connoted nouns can be used. Therefore, a plurality of different types of phrases can be presented for the person.

In another embodiment depending on a type of input phrase the type of positive connoted phrase is selected. For example, if a negative connoted noun is inputted a positive connoted noun can be outputted. Alternatively, if a negative connoted adverb is inputted, a positive connoted adverb may be outputted. Therefore, different phrases can be outputted depending on the input. Therefore, the user is able to use the positive connoted phrase instead of the negative connoted phrase.

According to another embodiment, if a sentence as the input phrase is captured, a positive connoted sentence is selected and presented. Therefore, also sentences can be inputted by the user and the artificial intelligence may output a completely sentence, which is semantically similar but is using positive connoted phrases. The sentence may comprise a plurality of negative connoted phrases, which were transformed in positive connoted phrases. Therefore, the whole sentence can be transformed with at least one positive connoted phrase.

According to another embodiment the positive connoted phrase is presented on a display device. For example, the electronic computing device may comprise a display device.

Therefore, the positive connoted phrase may be displayed on the display device. The person can therefore easy perceive the positive connoted phrase.

In another embodiment, the positive connoted phrase is presented via a speaker device. For example, the electronic computing device may comprise a speaker device. The positive connoted phrase can then be outputted via the speaker device. Therefore, the person can easy perceive the positive connoted phrase.

According to another embodiment the input platform is provided as an online platform. In particular, the input platform is provided via a backend. Therefore, the artificial intelligence may be provided by a high-performance electronic computing device. This has the advantage that the artificial intelligence, which may need high computational power, can be provided centrally. In particular, the artificial intelligence may be trained with a high amount of trainings data. Therefore, just one high performance computer is used, and the person can use the platform via an online entry.

According to another embodiment, the input of a negative connoted phrase is presented neighboring to the selected positive connoted phrase. For example, on the left side on a display device the inputted negative connoted phrase is presented. Neighboring to the inputted negative connoted phrase the positive connoted phrase can be displayed. Therefore, the user can instinctively perceive the positive connoted phrase to the corresponding negative connoted phrase on the display device.

According to another embodiment the negative connoted phrase and the positive connoted phrase are semantically related to each other. Therefore, the positive connoted phrase can be used as a substitute for the person.

In particular, the present invention is a computer-implemented method. Therefore, another aspect of the invention relates to a computer program product comprising program code means for performing a method according to the preceding aspect.

A still further aspect of the invention relates to a computer-readable storage medium comprising at least a computer program product according to the preceding aspect.

Furthermore, the present invention relates to an electronic computing device for providing a training simulation for a person, wherein the electronic computing device is configured for performing a method according to the preceding aspect.

In particular, the electronic computing device may be connected to a network and for example may get access to a backend, wherein the backend may comprise the artificial intelligence. Furthermore, the electronic computing device may comprise a plurality of input devices, for example a keyboard, a mouse, or a microphone. Furthermore, the electronic computing device may comprise a plurality of output devices, for example a display device or a speaker device.

Advantageous embodiments of the method are to be regarded as advantageous embodiments of the computer program product, the computer-readable storage medium, as well as the electronic computing device. The electronic computing device therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The electronic computing device may in particular use the technique of NLP. NLP may use different technical methods for providing its service: Tokenization: This is the process of breaking down text into individual words or tokens. Tokenization is a fundamental step in NLP, as it allows us to analyze and manipulate text at the word level; Part-of-Speech Tagging: This is the process of labeling each word in a sentence with its corresponding part of speech (e.g., noun, verb, adjective, etc.). Part-of-speech tagging helps us understand the syntactic structure of a sentence and is often used as an intermediate step in more complex NLP tasks; Parsing: This is the process of analyzing the grammatical structure of a sentence to identify its subject, verb, object, and other grammatical relationships. Parsing is used to extract meaning from text and is often used in applications such as machine translation and sentiment analysis; Named Entity Recognition (NER): This is the process of identifying and categorizing named entities (e.g., people, organizations, locations) in text. NER is used in a variety of applications, including information extraction, question answering, and search. Sentiment Analysis: This is the process of analyzing text to determine its overall sentiment or emotion. Sentiment analysis is used in applications such as social media monitoring, customer feedback analysis, and brand reputation management. Machine Translation: This is the process of automatically translating text from one language to another. Machine translation uses techniques such as statistical machine learning and neural machine translation to generate translations that are increasingly accurate and idiomatic. Text Classification: This is the process of categorizing text into predefined categories based on its content. Text classification is used in applications such as spam filtering, topic modeling, and sentiment analysis. Information Extraction: This is the process of extracting structured information from unstructured text. Information extraction involves techniques such as named entity recognition, part-of-speech tagging, and parsing to identify and extract relevant information from text. Chatbots and Virtual Assistants: These are Al systems that use NLP to interact with users in natural language. Chatbots and virtual assistants are used in applications such as customer service, information retrieval, and personal assistance. Transfer Learning: This is a technique in NLP where pre-trained models are fine-tuned on specific tasks or domains. Transfer learning has been shown to be highly effective in NLP, allowing models to leverage large amounts of pre-existing knowledge and adapt to new tasks with minimal data.

In order to provide a robust NLP, training of the model is required. Training data is the input that is used to train NLP models. It typically consists of large amounts of text data, along with labels or annotations that indicate the desired output for each input. The quality and quantity of training data are critical factors in determining the performance of NLP models.There are several types of training data commonly used in NLP: Annotated Data: This is training data that has been manually labeled or annotated by human experts. For example, a dataset of product reviews might be annotated with sentiment labels (positive, negative, neutral) to train a sentiment analysis model; Synthetic Data: This is training data that is generated artificially, often using algorithms or templates. Synthetic data can be useful for tasks where annotated data is scarce or expensive to obtain. For example, a synthetic dataset of dialogues might be generated to train a chatbot model; Unsupervised Data: This is training data that does not have any associated labels or annotations. Unsupervised data can be used to train models for tasks such as clustering, topic modeling, and word embedding; Pre-trained Models: These are NLP models that have been pre-trained on large amounts of text data, often using unsupervised learning techniques. Pre-trained models can be fine-tuned on specific tasks or domains using transfer learning; Data Augmentation: This is a technique used to artificially increase the size and diversity of training data by applying transformations such as synonym replacement, insertion, deletion, and substitution. Data augmentation can help improve the robustness and generalization of NLP models; Data Balancing: This is a technique used to address class imbalance in annotated datasets. Class imbalance occurs when one class has significantly more examples than another class, leading to bias in the model. Data balancing techniques include oversampling, undersampling, and SMOTE (Synthetic Minority Over-sampling Technique); Data Cleaning: This is a preprocessing step used to remove noise and inconsistencies from training data. Data cleaning involves techniques such as spelling correction, punctuation normalization, and stopword removal; Data Splitting: This is the process of dividing the training data into separate sets for training, validation, and testing. The training set is used to train the model, the validation set is used to tune hyperparameters and prevent overfitting, and the test set is used to evaluate the final performance of the model.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

Therefore:
- FIG 1: shows a schematic block diagram according to an embodiment of an electronic computing device; and
- FIG 2: a schematic view to a display device of an electronic computing device performing the method.

In the figures the same elements are comprising the same reference signs.

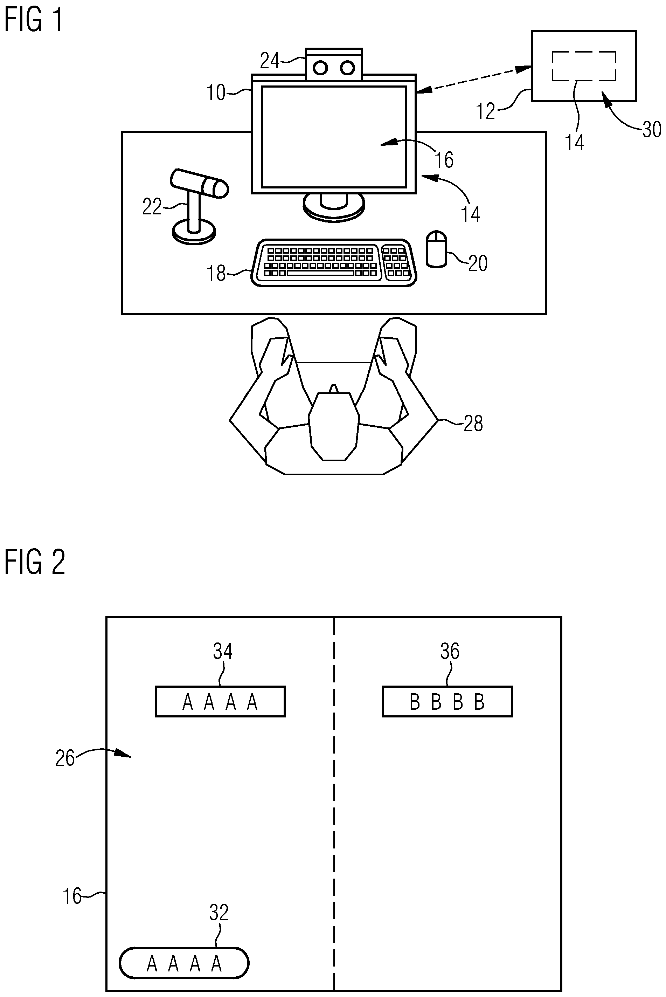

FIG 1 shows a schematic block diagram according to an embodiment of an electronic computing device 10. The electronic computing device 10 may be connected to a central electronic computing device12. The electronic computing device 10 may comprise an artificial intelligence 14. Alternatively the artificial intelligence 14 may be provided by the central electronic computing device 12. This central electronic computing device 12 may also be regarded as a so called backend server.

The electronic computing device 10 according the shown embodiment comprises a display device 16, a keyboard 18, a mouse 20, as well as a microphone 22. The keyboard 18, the mouse 20 as well as the microphone 22 may also be regarded as so called input devices. Furthermore, the electronic computing device 10 may comprise speakers 24, wherein the display device 16 as well as the speakers 24 may be regarded as output device.

The electronic computing device 10 is in particular configured for providing a training simulation 26 (FIG 2) for a person 28.

The artificial intelligence 14 is in particular configured as a so called large language model 30.

FIG 2 shows a schematic view on the display device 16. According to an embodiment an input platform 32 for capturing at least one input phrase 34 from the person 28 is provided by the electronic computing device 10. The input phrase 34 is analyzed depending on a negative connotation by the electronic computing device, in particular from the artificial intelligence 14. If a negative connotation of the input phrase 34 is determined, the meaning of the input phrase 34 is determined by the artificial intelligence 14. Depending on the determined meaning, a positive connoted phrase 36 is selected by the artificial intelligence 14, wherein the positive connoted phrase 36 is inside a meaning range of the input phrase 34. The positive connoted phrase 36 is presented for the person 28 by the electronic computing device.

In particular, as already mentioned, the artificial intelligence 14 is a large language model 30. Furthermore, as the positive connoted phrase 36 an adjective, and/or a noun, and/or an adverb, and/or a verb is selected. Furthermore, depending on a type of input phrase 34 the type of positive connoted phrase 36 is selected. Furthermore, if a sentence as the input phrase 34 is captured, a positive connoted sentence is selected and presented.

According to FIG 2, the positive connoted phrase 36 is presented on the display device 16. Additionally, or alternatively, the positive connoted phrase 36 may be presented via the speaker device 24.

As already mentioned, the input platform 32 is provided as an online platform. Therefore, the electronic computing device 10 may be connected to the external electronic computing device 12 for example via a network.

As shown in FIG 2, the inputted negative connoted phrase 34 is presented neighboring to the selected positive connoted phrase 36. The negative connoted phrase 34 and the positive connoted phrase 36 are thematically and semantically related to each other.

Therefore, the large language model 30 is involved to turn negatively into positivity. The device application enables the person 28 to enter all negative traits of the opponent, for example, lazy, procrastinator, jealous, arrogant. These are sent to the large language model 30 in for example the backend with instructions to find the positive end of the same spectrum. For example relaxed for lazy, efficient time manager for procrastinator, protective for jealous, confident for arrogant, and displays these opposites to the person 28. This guides the person 28 away from stereotypical thinking or shoe boxing toward an open positive mindset and respectfulness.

### List of Reference

- 10: electronic computing device
- 12: external electronic computing device
- 14: artificial intelligence
- 16: display device
- 18: keyboard
- 20: mouse
- 22: microphone
- 24: speaker device
- 26: training simulation
- 28: person
- 30: large language model
- 32: input platform
- 34: input phrase
- 36: positive connoted phrase

## Claims

1. A method for providing a training simulation (26) for a person (28) by an electronic computing device (10), comprising the steps of:
- providing an input platform (32) for capturing at least one input phrase (34) from the person (28) by the electronic computing device (10);
- analyzing the input phrase (34) depending on a negative connotation by an artificial intelligence (14) of the electronic computing device (10);
- if a negative connotation of the input phrase (34) is determined, determining the meaning of the input phrase (34) by the artificial intelligence (14);
- depending on the determined meaning, selecting a positive connoted phrase (36) by the artificial intelligence (14), wherein the positive connoted phrase (36) is inside a meaning range of the input phrase (34); and
- presenting the positive connoted phrase (36) for the person (28) by the electronic computing device (10).

2. The method according to claim 1, wherein
the artificial intelligence (14) is provided as a large language model (30).

3. The method according to claim 1 or 2, wherein
as the positive connoted phrase (36) an adjective and/or a noun and/or an adverb and/or a verb is selected.

4. The method according to claim 3, wherein
depending on a type of input phrase (34) the type of positive connoted phrase (36) is selected.

5. The method according to any one of claims 1 to 4, wherein,
if a sentence as the input phrase (34) is captured, a positive connoted sentence is selected and presented.

6. The method according to any one of claims 1 to 5, wherein
the positive connoted phrase (36) is presented on a display device.

7. The method according to any one of claims 1 to 6, wherein
the positive connoted phrase (36) is presented via a speaker device.

8. The method according to any one of claims 1 to 7, wherein
the input platform (32) is provided as an online platform.

9. The method according to any one of claims 1 to 8, wherein
the inputted negative connoted phrase is presented neighboring to the selected positive connoted phrase (36).

10. The method according to any one of claims 1 to 9, wherein
the negative connoted phrase and the positive connoted phrase are semantically related to each other.

11. A computer program product comprising program code means for performing a method according to any one of the claims 1 to 10.

12. A computer-readable storage medium comprising at least the computer program product according to claim 11.

13. An electronic computing device (10) for providing a training simulation (26) for a person (28), wherein the electronic computing device (10) is configured for performing a method according to any one of claims 1 to 10.
